# EUROPÄISCHE PATENTSCHRIFT

(11) **EP 0 640 289 B1**
(45) Veröffentlichungstag und Bekanntmachung des Hinweises auf die Patenterteilung: **06.05.1999**
(21) Anmeldenummer: 94112632.8
(22) Anmeldetag: 12.08.1994
(51) Int. Cl.: A22C 13/00

(54) **Geraffte, füllfertig konditionierte Nahrungsmittelhülle**
Conditioned shirred food casings ready for filling
Enveloppes plissés et conditionnées prêtes à l'emploi pour produits alimentaires

(30) Priorität: 25.08.1993 DE 4328517
(43) Veröffentlichungstag der Anmeldung: 01.03.1995
(73) Patentinhaber: WOLFF WALSRODE AKTIENGESELLSCHAFT, D-29699 Walsrode (DE)
(72) Erfinder: Hennig-Cardinal von Widdern, Michael, Dipl.-Ing., D-29664 Walsrode (DE); Wehde, Friedrich, Dipl.-Ing., verstorben (DE)
(74) Vertreter: Hellfeldt, Kurt, Dr.

(56) Entgegenhaltungen:
- WO-A-87/03452
- CH-A- 459 793
- DE-A- 4 001 131
- FR-A- 2 349 282

## Beschreibung

Die Erfindung betrifft eine geraffte, füllfertig konditionierte, mindestens zweischichtig coextrudierte Schlauchfolie zur Umhüllung von in flüssigem oder pastösem Zustand abgepackten Füllgütern, insbesondere Wurstbrät.

Unter füllfertiger Konditionierung der schlauchförmigen Hülle versteht der Fachmann, daß die allgemein übliche Wässerung des gerafften Hüllenmaterials in der fleischverarbeitenden Industrie vor der Füllung mit Brät entfallen kann. Dieser vorgeschaltete Verarbeitungsschritt dient insbesondere der Steigerung der Flexibilität und der Verbesserung der Gleiteigenschaften der Hüllen auf den Füllautomaten.

Der Wässerungsvorgang kurz vor der Brätbefüllung hat in der Vergangenheit häufig zu verarbeitungstechnischen Schwierigkeiten und qualitativen Nachteilen dadurch geführt, daß die Wasseraufnahme der hydrophilen Hüllenbestandteile unzureichender und/oder ungleichmäßig war. Daraus resultieren aufgrund unzureichend bzw. ungleichmäßiger Erweichung der hydrophilen Materialien vom Idealzustand stark abweichende Festigkeitseigenschaften, die sich negativ auf die Durchmesseraufweitung der Hülle während des Füllprozesses auswirken. Eine definierte Durchmesseraufweitung ist dringend erforderlich, um nach dem anschließenden Kochprozeß ein geometrisch gleichförmiges Produkt zu erhalten und um eine eng anliegende, faltenfreie Umhüllung des Füllgutes garantieren zu können.

Die Ursachen für die unzureichende und/oder ungleichmäßige Wasseraufnahme der hydrophilen Hüllenbestandteile können vielfältiger Natur sein:
- zu kurze Wässerungsdauer verhindert ausreichende Wasseraufnahme und Ausgleichs- bzw. Verteilungsvorgänge in der Folie
- ein geschlossener hydrophober Raffölfilm auf der Folienoberfläche behindert gleichmäßige Wasseraufnahme,
- Raffraupenfältelung und daraus resultierende partielle Raffölkonzentrationen behindern gleichmäßige Wasserbenetzung der hydrophilen Folienoberfläche
- hydrophobe Druckfarben auf der Folienoberfläche behindern die gleichmäßige Wasseraufnahme der hydrophilen Folienbestandteile.

Ein weiterer Nachteil der üblichen Wässerungstechnik ist darin zu sehen, daß das Wässerungsbad eine mögliche Quelle für die bakterielle Kontaminierung der Hüllen und damit des Füllgutes darstellt.

Die Erfindung ist eine Weiterentwicklung der allgemein üblichen Konfektionierungstechnik von Folienstrukturen aus DE-A 41 28 083 und DE-A 41 28 081.

Abweichend von der allgemein üblichen Wässerungstechnik in der Fleischwarenindustrie beschreibt die europäische Patentschrift EP 248 860 ein Verfahren, mittels dessen einschichtig extrudierte Folien in einen für den Anwender füllfertigen Zustand überführt werden können. Dabei wird der einschichtig extrudierte, biaxial verstreckte, überwiegend aus hydrophilem Polyamid bestehende Folienschlauch zum Beispiel in line zum Extrusionsprozeß in den wassergesättigten Zustand gebracht. Dies wird bevorzugt technisch dadurch realisiert, daß in den gereckten und eventuell vollständig thermofixierten Schlauch zwischen zwei Walzenpresseuren eine Wasserblase eingefüllt wird, aus der durch eine gezielte Durchlässigkeit des zweiten Walzenpresseurs Wasser in den Folienwickel geschleppt wird. Im Laufe der Lagerungszeit nimmt das hydrophile Polyamid das Wasser auf und wird weich.

Nachteil dieses Verfahrens ist die unzureichende Bedruckbarkeit der wassergesättigten Folienoberfläche. Dieses Problem kann behoben werden, indem der Folienschlauch erst nach dem Bedrucken unter Anwendung der oben geschilderten Wasserblasentechnik umgewickelt wird. Dieser zusätzliche Arbeitsschritt steigert jedoch die Herstellungskosten des Produktes in unnötiger Weise.

Der Anmelder beschreibt die kennzeichnenden Merkmale der füllfertig konditionierten Folie in der Weise, daß der Polyamidanteil wenigstens 5 Gew.-% Wasser, keine Raffschmiermittel und keine Feuchthaltemittel enthält.

Eigene Untersuchungen kamen zu dem Ergebnis, daß die kennzeichnenden Merkmale der einschichtig extrudierten Polyamidhüllen, insbesondere der wassergesättigte Zustand des Polyamids, vorteilhaft hinsichtlich der erreichbaren Kaliberkonstanz ist, allerdings konnte ein störungsfreier Lauf der Hüllen auf dem Füllautomaten nur durch nachträglichen Ölauftrag auf die Folienoberfläche sichergestellt werden.

Für mehrschichtig coextrudierte Hüllen gemäß den Anmeldungen DE-A 41 28 083 und DE-A 41 28 081 eignet sich das beschriebene Verfahren nicht, da die Wasser(dampf)permeation in die außenliegende Polyamidschicht durch mindestens eine zwischenliegende Schicht mit wasserdampfsperrendem Charakter stark behindert wird.

Demgemäß ist es Aufgabe der nachfolgend beschriebenen Erfindung, eine füllfertig konditionierte, Raffschmiermittel enthaltende Raffraupenqualität aus einem coextrudiertem Folienschlauch, der außenseitig hydrophiles, thermoplastisches Material enthält, zur Verfügung zu stellen, ohne Nachteile hinsichtlich Bedruckbarkeit, Herstellkosten und Füllautomatenlauf hinnehmen zu müssen. Parallel dazu soll eine technische Lösung vorgeschlagen werden, mit der diese Konditionierung sicher und auf wenig kostenintensive Art umgesetzt werden kann.

Gegenstand der vorliegenden Erfindung ist eine geraffte, füllfertig konditionierte, mindestens zweischichtig coextrudierte Schlauchfolie zur Umhüllung von in flüssigem oder pastösem Zustand abgepackten Füllgütern, insbesondere Wurstbrät, enthaltend eine außenliegende Schicht, die überwiegend aus hydrophilem aliphatischem, hydrophilem Polyamid besteht, das bis zu seiner Sättigung wenigstens 8 Gew.-% an Wasser aufnehmen kann, und enthaltend mindestens eine weitere Schicht mit wasserdampfsperrendem Charakter, dadurch gekennzeichnet, daß die außenliegende Schicht aus überwiegend hydrophilem Polyamid in wassergesättigtem Zustand vorliegt und die Folienoberfläche mit einer wäßrigen Ölemulsion benetzt ist.

Der Auftrag der wäßrigen Ölemulsion erfolgt bevorzugt direkt an der Raffmaschine vor dem eigentlichen Raffprozeß und kann mittels technischer Einrichtungen vorgenommen werden, die nach dem Stand der Technik für den Auftrag des Raffschmiermittels eingesetzt werden. Der Auftrag der Ölemulsion verfolgt insbesondere das Ziel, ausreichend Wasseranteile auf die hydrophile Polyamid-Folienoberfläche zu bringen, damit diese im Verlauf der anschließenden Lagerung in den wassergesättigten Zustand überführt wird.

Überraschenderweise wird der Raffprozeß durch den Auftrag der Ölemulsion in keiner Weise gestört, was unter Umständen durch ein verändertes Gleitverhalten der mit Ölemulsion benetzten Folien während der Konfektionierung, gegenüber einer Folie mit purem Ölauftrag, zu erwarten gewesen wäre, insbesondere deswegen, weil die Rafftechnologie bei den durchgeführten Versuchsreihen nicht auf die veränderte Schmiermittelzusammensetzung abgestimmt war.

Vielmehr wirkt sich der Auftrag der Ölemulsion insofern positiv auf die Qualität der Raffraupe aus, als die Kompression gesteigert werden kann und somit eine größere Laufmeterlänge Schlauchfolie auf einer vorgegebenen Raffraupenlänge eingebracht werden kann. Desweiteren weisen die erfindungsgemäßen Raffraupen eine verringerte Rückstellkraft auf, das heißt, die erfindungsgemäße Raffraupenqualität neigt weniger zur Dekompression.

Überraschend ist auch die Vielzahl an qualitätssteigernden Effekten, die durch diese einzelne Maßnahme, nämlich dem Auftrag der Ölemulsion, erreicht wird. So konnte in vergleichenden anwendungstechnischen Fülltests nachgewiesen werden, daß die Würste weniger zur "Säbelform" neigten, das heißt, eine ungerade Form aufwiesen, daß diese einen sehr gleichmäßigen Durchmesser aufwiesen und daß die Raffmarkierungen weniger deutlich ausgeprägt waren.

Die Erfindung betrifft insbesondere Folienstrukturen, wie diese beispielsweise in den DE 41 28 083 und DE 41 28 081 beschrieben werden. Diese sind dadurch gekennzeichnet, daß sie eine außenliegende Schicht, die überwiegend aus aliphatischem, hydrophilem Polyamid besteht, und mindestens eine weitere Schicht mit wasserdampfsperrendem Charakter enthalten. Dieser Aufbau bedingt, daß die Wasseraufnahme der außenliegenden Polyamidschicht von außen vorzunehmen ist. Während bei einschichtigen Polyamidhüllen eine Transmission des penetrierenden Wassers aus der außen aufgebrachten Ölemulsion erfolgt, wird bei den bevorzugt eingesetzten Folienstrukturen die Permeation des Wassers an der Schicht mit wasserdampfsperrendem Charakter aufgehalten. Bei längeren Lagerzeiten empfiehlt sich für die mit der Ölemulsion benetzten erfindungsgemäßen Hüllen zum Beispiel die Verpackung in wasserdampfdichten Polyethylenbeuteln.

Zur Konditionierung der erfindungsgemäßen Hüllen eignen sich Ölemulsionen, deren Ölanteil aus mineralischem und/oder pflanzlichem Grundmaterialien besteht. Bei pflanzlichen Ölen ist darauf zu achten, daß durch Zugabe allgemein bekannter konservierender Bestandteile die notwendige Haltbarkeit erreicht wird.

Die Verwendung von Emulgatoren erleichtert den Auftrag einer konstanten Qualität und Konzentration des Öl/Wassergemisches. Besonders vorteilhaft lassen sich Ölemulsionen mit 20 bis 50 Gew.% Öl verarbeiten. Die genaue Konzentration der Öl in Wasser-Emulsion muß in Kenntnis darüber ermittelt werden, welcher Flächenauftrag an Öl in Abhhängigkeit des eingesetzten Raffverfahrens und nachfolgender Verarbeitungsschritte vorteilhaft erscheint.

Als Ausgangsmaterialien für die Ölemulsion eignen sich z.B. Oliven-, Lein-, Palm-Sonnenblumen- oder Kokosöl sowie Paraffin- oder Siliconöle. Selbstverständlich können auch geeignete Gemische verschiedener Öle eingesetzt werden. Die Ölemulsion wird in einer Menge von etwa 2 bis 50 g, bevorzugt 5-30 g/20 m Raffraupe aufgetragen.

Als Raffschmiermittel werden die üblichen bekannten Mittel verwendet und zwar in Mengen von etwa 1-50 g, bevorzugt 2-20 g/20 m Raffraupe.

Der Gegenstand der vorliegenden Erfindung soll anhand der folgenden Beispiele näher erläutert werden.

### Beispiele

Die im nachfolgenden aufgeführten Beispiele wurden anhand biaxial verstreckter Schlauchfolien, Durchmesser 40 mm, realisiert. Die aus unterschiedlichen Polymeren bestehenden Schichten der erfindungsgemäß konditionierten, coextrudierten Hüllen und der in den Vergleichsbeispielen eingesetzten Hüllen werden wie folgt abgekürzt:
- PA =: Polyamid 6
(Durethan B 38 F von Bayer)
- IO =: Zink-Ionomerpolymer
(Surlyn 1650 von Du Pont)
- HV =: Ethylen-basierender Haftvermittler
(Escorene CTR 2000 von Exxon)
- PO =: Propylen-basierendes Copolymer mit Maleinsäureanhydrid
(Admer QF 551 E von Mitsui)
- XX =: Ethylen-Vinylalkohol-Copolymer
(EVAL EP-F 101 BZ von Kuraray)
- PP =: Propylen/Ethylen-Copolymer
(Eltex PKL 415 von Solvay)

Vor dem Raffen wurden die Folienmuster mit einem Druckbild versehen, welches ca. 1/3 der Fläche einer Seite der flachgelegten Hüllen bedeckte.

Mit der Zielvorgabe, praxisrelevante Prüfergebnisse zu erarbeiten, wurde folgendes Prüfprocedere festgelegt:

Geprüft werden Muster mit erfindungsgemäßer Mehrschichtenstruktur im Vergleich zu Hüllen, die nicht unter die Erfindung fallen.

Ein Teil der Prüfmuster wird füllfertig konditioniert, indem direkt vor dem eigentlichen Raffprozeß eine Ölemulsion auf die äußere Hüllenoberfläche aufgetragen wird. Die so behandelten Raffraupen werden anschließend für 10 Tage in einem wasserdampfdichten Polyethylenbeutel gelagert und dann direkt aus dem Beutel heraus, ohne weitere Wässerung, auf einem Füllautomaten mit Fleischwurstbrät gefüllt.

Der andere Teil der Prüfmuster wird unter Einsatz von Raffschmiermittel gerafft und vor der Füllung mit Fleischwurstbrät 15 Minuten lang in auf 30°C temperiertem Wasser gewässert.

Die so hergestellten Würste werden nach der Füllung 1 Stunde bei 80°C gekocht, mit kaltem Wasser abgeduscht und anschließend bei 3°C im Kühlhaus eingelagert. Nach 24-stündiger Lagerung im Kühlhaus werden folgende vergleichende Prüfungen vorgenommen:
1. Beurteilung der Raffalten
   Die extrem hohe mechanische Beanspruchung der Kunststoffhüllen im Bereich des Biegeradius der Falten ist in Abhängigkeit zur Folienkonditionierung unterschiedlich stark ausgeprägt. Für die abschließende Beurteilung wurde ein Bewertungsmaßstab von
   - 1 =: geringe Raffaltenausprägung
   bis
   - 4 =: starke Raffaltenausprügung
   zugrunde gelegt.
2. Beurteilung der Kaliberkonstanz
   Von großer Bedeutung für die industriellen Anwender ist die geometrische Gleichförmigkeit der Wurstprodukte, die sich unter anderem an einem gleichmäßigen Durchmesser der Produkte feststellen läßt. Für die abschließende Beurteilung wurde ein Bewertungsmaßstab von
   - 1 =: +/- 0,1 mm
   bis
   - 4 =: +/- 0,4 mm
   zugrunde gelegt, wobei der Durchmesser in der Mitte der ca. 20 cm langen Würste gemessen wurde.
3. Beurteilung der Säbelform
   Unter Säbelform versteht der Fachmann ein Abweichen der fertiggestellten Wurst von der geraden Form über der Länge. Diese Abweichung führt insbesondere bei längeren Würsten zu Schwierigkeiten bei der späteren Verpackung in Kartons. Die Beurteilung wird an ca. 20 cm langen Würsten vorgenommen, wobei deren Abweichen von einer geraden Mittelachse ausgemessen wird. Für die abschließende Beurteilung wurde ein Bewertungsmaßstab von
   - 1 =: < 4 mm Abweichung
   - 2 =: < 8 mm Abweichung
   - 3 =: < 12 mm Abweichung
   - 4 =: > 12 mm Abweichung
   zugrunde gelegt.

### Beispiel 1

Eine coextrudierte biaxial verstreckte Hülle mit dem Aufbau B1:
(von innen nach außen)
IO (10 µm) / HV (5 µm) / PA (30 µm)
wurde nach Durchlaufen einer Corona-Vorbehandlungsstation mit Wasser-basierender Druckfarbe bedruckt, wobei der Druck ca. 1/3 der Fläche einer Seite der flachgelegten Hülle bedeckte. Anschließend wurde nach 24-stündiger Zwischenlagerung ein Teil A der bedruckten Ware erfindungsgemäß unter der Verwendung einer Ölemulsion gerafft und in einem wasserdampfdichten Polyethylenbeutel für 10 Tage eingelagert und der andere Teil B der bedruckten Ware unter Verwendung eines konventionellen Schmiermittels gerafft.

Das Verhältnis Öl zu Wasser in der Ölemulsion betrug 1 zu 3. Zum Einsatz kam ein hochsiedendes Mineralöl von Fauth & Co. mit dem Handelsnamen Paraffinöl DAB VII, welches auch als konventionelles Raffschmiermittel verwendet wurde. Die Aufbereitung der Ölemulsion wurde in einem Ultra-Turax-Rührgerät vorgenommen. Zur Stabilisierung der Emulsion wurde ein Emulgator eingesetzt.

Der Auftrag der Ölemulsion erfolgte an einer konventionellen Raffmaschine durch eine Sprühvorrichtung, die für die Verarbeitung von Raffschmiermitteln ausgelegt ist. Die Ölemulsion wurde in einer Menge von 12 g/20 m Raffraupe aufgetragen, das Raffschmiermittel in einer Menge von 4 g/20 m Raffraupe.

Das Raffen unter Zuhilfenahme der Ölemulsion konnte ohne Einbußen der Raffraupenqualität vorgenommen werden.

Während nun der füllfertig konditionierte Teil A der Raffraupen ohne die übliche Wässerung auf dem Wurstfüllautomaten zu 20 cm langen Würsten weiterverarbeitet wurde, wurde der Teil B vor der Fleischwurstfüllung 15 Minuten lang in auf 30°C temperiertem Wasser gewässert.

Nach dem Kochen der unterschiedlich behandelten Muster werden nach 24-stündiger Lagerung die oben beschriebenen Prüfungen hinsichlich und die Ergebnisse bewertet. Die Bewertungen sind in den Tabellen 1 bis 3 zusammengefaßt.

### Beispiele 2 bis 4

Gegenüber Beispiel 1 unterscheiden sich die Beispiele 2 bis 4 nur durch voneinander abweichende Folienstrukturen. Die Konfektionierungsschritte, die füllfertige Konditionierung, die weitere Verarbeitung und die Beurteilung sind mit der Vorgehensweise in Beispiel 1 identisch. Die im nachfolgenden dargestellten Folienstrukturen zeigen die Schichtenfolge der coextrudierten Hüllen von innen nach außen:
- B2:: PA (5 µm) / PO (5 µm) / XX (3 µm) / PA (30 µm)
- B3:: PA (5 µm) / PO (5 µm) / PA (15 µm) / XX (3 µm) / PA (20 µm)
- B4:: PA (5 µm) / PO (3 µm) / XX (3 µm) / PO (3 µm) / PA (30 µm)

### Vergleichsbeispiele 1 bis 3

Folgende coextrudierte Folienstrukturen wurden als Vergleichsbeispiele in die Untersuchung miteinbezogen und wie die Beispiele 1 bis 4 nach oben beschriebenem Procedere behandelt (von innen nach außen):
- V1:: PA (30 µm) / HV (5 µm) / PP (10 µm)
- V2:: PA (25 µm) / HV (3 µm) / XX (3 µm) / HV (3 µm) / PP (10 µm)

Während die unterschiedlichen Konfektionierungsschritte vergleichbar mit den Beispielen 1 bis 4 problemlos realisiert werden konnten, weichen die abschließenden Beurteilungen der fertiggestellten Würste erheblich von denen aus den vorgenannten Beispielen ab (Tabellen 1 bis 3).

Geraffte, füllfertig konditionierte Nahrungsmittelhülle
Tabellen 1 bis 3 zu den Beispielen

**Tabelle 1**

| Beurteilung der Raffalten | | |
|---|---|---|
| Prüfmuster | "füllfertig konditioniert" | "konventionell gewässert |
| B1 | 1 | 3 |
| B2 | 1 | 3 |
| B3 | 1 | 3 |
| B4 | 1 | 3 |
| V1 | 4 | 2 |
| V2 | 4 | 2 |
| Bewertungsmaßstab: 1 = geringe Raffaltenausprägung bis 4 = starke Raffaltenausprägung | | |

**Tabelle 2**

| Beurteilung der Kaliberkonstanz | | |
|---|---|---|
| Prüfmuster | "füllfertig konditioniert" | "konventionell gewässert" |
| B1 | 1 | 3 |
| B2 | 1 | 2 |
| B3 | 1 | 3 |
| B4 | 1 | 2 |
| V1 | 4 | 2 |
| V2 | 4 | 2 |
| Bewertungsmaßstab: 1 = +/- 0,1 Kaliberabweichung bis 4 = +/- 0,4 mm Kaliberabweichung | | |

**Tabelle 3**

| Beurteilung der Säbelform | | |
|---|---|---|
| Prüfmuster | "füllfertig konditioniert" | "konventionell gewässert" |
| B1 | 1 | 4 |
| B2 | 1 | 3 |
| B3 | 1 | 3 |
| B4 | 1 | 4 |
| V1 | 2 | 1 |
| V2 | 2 | 1 |
| Bewertungsmaßstab: 1 = < 4 mm Abweichung von der Mittelachse 2 = < 8 mm Abweichung 3 = < 12 mm Abweichung 4 = > 12 mm Abweichung | | |

## Patentansprüche

1. Geraffte, füllfertig konditionierte, mindestens zweischichtig coextrudierte Schlauchfolie zur Umhüllung von in flüssigem oder pastösem Zustand abgepackten Füllgütern, insbesondere Wurstbrät, enthaltend mindestens eine außenliegende Schicht, die aus überwiegend aus hydrophilem, aliphatischem Polyamid besteht, welches bis zur seiner Sättigung wenigstens 8 Gew.-% an Wasser aufnehmen kann, und enthaltend mindestens eine weitere Schicht mit wasserdampfsperrendem Charakter, dadurch gekennzeichnet, daß der Polyamidanteil der außenliegenden Schicht infolge des Auftragens einer wäßrigen Ölemulsion im Verlauf des Raffprozesses einen Wassergehalt aufweist, der der Sättigungskonzentration des Polyamids entspricht und die Oberfläche der außenliegenden Schicht mit einem Raffschmiermittel aus der wäßrigen Ölemulsion benetzt ist.

2. Geraffte, füllfertig konditionierte Schlauchfolie nach Anspruch 1, dadurch gekennzeichnet, daß diese biaxial verstreckt ist.

3. Geraffte, füllfertig konditionierte Schlauchfolie nach den Ansprüchen 1 oder 2, dadurch gekennzeichnet, daß diese vollständig oder derart thermofixiert ist, daß ein thermisch initiierbarer Restschrumpf vorhanden ist.

4. Geraffte, füllfertig konditionierte Schlauchfolie nach wenigstens einem der vorstehenden Ansprüche, dadurch gekennzeichnet, daß die außenliegende Polyamidschicht im wesentlichen aus Polyamid 6 und/oder Copolyamiden auf Basis von Caprolactam und/oder Mischungen aus denselben besteht.

5. Geraffte, füllfertig konditionierte Schlauchfolie nach wenigstens einem der vorstehenden Ansprüche, dadurch gekennzeichnet, daß eine oder mehrere Schichten mit wasserdampfsperrenden Charakter aus Polyethylen oder Polypropylen oder aus Copolymeren basierend auf Ethylen oder Propylen oder aus Mischungen derselben besteht.

6. Geraffte, füllfertig konditionierte Schlauchfolie nach wenigstens einem der vorstehenden Ansprüche, dadurch gekennzeichnet, daß die Raffölemulsion auf der außenliegenden Polymerschicht im wesentlichen aus Wasser und Öl besteht und gegebenenfalls einen oder mehrere Emulgatoren für das Öl enthält.

7. Geraffte, füllfertig konditionierte Schlauchfolie nach Anspruch 6, dadurch gekennzeichnet, daß die Raffölemulsion Oliven-, Lein-, Palm-, Sonnenblumen- oder Kokosöl und/oder ein Paraffin- oder Silikonöl enthält.

8. Geraffte füllfertig konditionierte Schlauchfolie nach wenigstens einem der vorstehenden Ansprüche, dadurch gekennzeichnet, daß diese mittels Standard-, Taumelscheiben-, Axial- oder Schraubenraffverfahren gerafft werden.

9. Verwendung von Schlauchfolien gemäß einem der Ansprüche 1-8 zur Umhüllung von Wurstwaren.

## Claims

1. A shirred, at least two-layered coextruded tubular film, conditioned ready for filling, for wrapping contents packed in liquid or paste-like condition, in particular sausage meat, the film containing at least one outer layer consisting predominantly of hydrophilic, aliphatic polyamide which can absorb at least 8 wt.% water before it is saturated, and containing at least one other layer acting as a barrier to water vapour, characterised in that, as a result of the application of an aqueous oily emulsion during the shirring process, the polyamide component of the outer layer has a water content which corresponds to the saturation concentration of the polyamide and the surface of the outer layer is wetted with a shirring lubricant made of the aqueous oily emulsion.

2. A shirred tubular film conditioned ready for filling according to claim 1, characterised in that it is biaxially stretched.

3. A shirred tubular film conditioned ready for filling according to claim 1 or 2, characterised in that it is thermofixed completely or to such an extent that the residual shrinkage can be thermally initiated.

4. A shirred tubular film conditioned ready for filling according to at least one of the preceding claims, characterised in that the outer polyamide layer consists substantially of polyamide 6 and/or copolyamides based on caprolactam and/or mixtures of the same.

5. A shirred tubular film conditioned ready for filling according to at least one of the preceding claims, characterised in that one or more layers acting as a barrier to water vapour consist of polyethylene or polypropylene or of copolymers based on ethylene or propylene or of mixtures of the same.

6. A shirred tubular film conditioned ready for filling according to at least one of the preceding claims, characterised in that the oily emulsion used for shirring on the outer polymer layer consists substantially of water and oil and optionally contains one or more emulsifiers for the oil.

7. A shirred tubular film conditioned ready for filling according to claim 6, characterised in that the oily emulsion used for shirring contains olive oil, linseed oil, palm oil, sunflower oil or coconut oil and/or a paraffin oil or silicone oil.

8. A shirred tubular film conditioned ready for filling according to at least one of the preceding claims, characterised in that it is shirred by means of standard, wobble plate, axial or screw tightening processes.

9. The use of the tubular films according to any of claims 1 to 8 as sausage casings.

## Revendications

1. Feuille coextrudée en gaine, froncée, conditionnée à l'état prêt au remplissage, comprenant au moins deux couches, pour l'enveloppement de matières de remplissage, en particulier de chair à saucisse emballée à l'état liquide ou pâteux, contenant au moins une couche externe qui est constituée principalement d'un polyamide aliphatique hydrophile qui est à même d'absorber de l'eau à concurrence d'au moins 8% en poids jusqu'à sa saturation et contenant au moins une couche supplémentaire dont la nature est d'arrêter la vapeur d'eau, caractérisée en ce que la fraction de polyamide de la couche externe suite à l'application d'une émulsion d'huile aqueuse au cours du processus de fronçage présente une teneur en eau qui correspond à la concentration de saturation du polyamide et la surface de la couche externe est humidifiée avec un lubrifiant de fronçage à partir de l'émulsion huile aqueuse.

2. Feuille extrudée en gaine, froncée, conditionnée à l'état prêt au remplissage selon la revendication 1, caractérisée en ce qu'elle est soumise à un étirage biaxe.

3. Feuille extrudée en gaine, froncée, conditionnée à l'état prêt au remplissage selon les revendications 1 ou 2, caractérisée en ce qu'elle est soumise à un thermofixage complet ou à un thermofixage tel qu'un retrait résiduel apte à être déclenché par voie thermique est présent.

4. Feuille extrudée en gaine, froncée, conditionnée à l'état prêt au remplissage selon au moins une des revendications précédentes, caractérisée en ce que la couche externe de polyamide est constituée essentiellement par du polyamide 6 et/ou par leurs copolyamides à base de caprolactame et/ou par des mélanges.

5. Feuille extrudée en gaine, froncée, conditionnée à l'état prêt au remplissage selon l'une quelconque des revendications précédentes, caractérisée en ce qu'une ou plusieurs couches, dont la nature est du type arrêtant la vapeur d'eau, est ou sont constituées par du polyéthylène ou du polypropylène ou par des copolymères à base d'éthylène ou de propylène ou encore par leurs mélanges.

6. Feuille extrudée en gaine, froncée, conditionnée à l'état prêt au remplissage selon au moins une des revendications ci-dessus, caractérisée en ce que l'émulsion de fronçage à base d'huile sur la couche polymère externe est constituée essentiellement d'eau et d'huile et contient, le cas échéant, un ou plusieurs émulsifiants pour l'huile.

7. Feuille extrudée en gaine, froncée, conditionnée à l'état prêt au remplissage selon la revendication 6, caractérisée en ce que l'émulsion de fronçage à base d'huile contient de l'huile d'olive, de l'huile de lin, de l'huile de palme, de l'huile de tournesol ou de l'huile de coco et/ou une huile de paraffine ou une huile de silicone.

8. Feuille extrudée en gaine, froncée, conditionnée à l'état prêt au remplissage selon au moins une des revendications précédentes, caractérisée en ce qu'elle est soumise à un fronçage au moyen d'un procédé de fronçage standard, à plateaux oscillants, de type axial ou à vis sans fin.

9. Utilisation de feuilles extrudées en gaines selon l'une quelconque des revendications 1 à 8 pour l'enveloppement d'articles de saucisses.
